# EUROPEAN PATENT SPECIFICATION

(11) **EP 2 072 924 B1**
(45) Date of publication and mention of the grant of the patent: **22.02.2012**
(21) Application number: 08254016.2
(22) Date of filing: 16.12.2008
(51) Int. Cl.: F24F 11/00, F25B 49/02, H02P 27/08

(54) **Motor controller of air conditioner**
Motorsteuerung einer Klimaanlage
Contrôleur de moteur d'un climatiseur

(30) Priority: 21.12.2007 KR 20070135487
(43) Date of publication of application: 24.06.2009
(73) Proprietor: LG Electronics Inc., Seoul (KR)
(72) Inventor: Hwang, Sun Ho, Changwon-si, Kyungsangnam 641-110 (KR); Jung, Han Su, Changwon-si, Kyungsangnam 641-110 (KR); Lee, Chung Hun, Changwon-si, Kyungsangnam 641-110 (KR)
(74) Representative: Palmer, Jonathan R.

(56) References cited:
- EP-A- 0 698 769
- EP-A- 1 152 521
- WO-A-98/15790
- WO-A-2007/061186
- JP-A- 2007 252 065
- US-B1- 6 397 611

## Description

### TECHNICAL FIELD

The present invention relates to a motor controller for an air conditioner, and more specifically to a motor controller for an air conditioner in which the period of an interrupt signal conforms to a control period.

### BACKGROUND ART

Air conditioners are generally arranged in a certain space, such as rooms, living rooms, offices, and stores, to adjust the temperature, moisture, clearness, and air flow to maintain inner environment clean and fresh.

An air conditioner may be commonly classified into an integral type and a stand-alone type. Both types are the same in their functions. In the integral type air conditioner, however, a cooling function has been integrated with a heating function, and the air conditioner is mounted on the wall or window. On the contrary, the stand-alone type air conditioner includes an indoor unit and an outdoor unit that are provided separately from each other. The indoor unit is located indoors for providing heating and cooling. The outdoor unit is located outdoors for heat dissipation and compression. The indoor unit is coupled with the outdoor unit via a refrigerant pipe. An air conditioner includes a motor used for a compressor or fan, and a motor controller for driving the motor. The motor controller converts AC utility power into DC power, and then the DC power into AC power having a predetermined frequency.

The period of an interrupt signal for outputting a switching control signal is set up as a predetermined value in order to control Ons/Offs of switching elements included in the motor controller. A control period is also set to generate the switching control signal. Since the period of the interrupt signal and the control period are separately set in the conventional motor controller, timers for each period are required.

EP 0 698 769 describes a method for controlling the motors of an air conditioner.

### SUMMARY OF INVENTION

An object of the present invention is to provide a motor controller for air conditioner according to claim 1.

In accordance with an aspect of the present invention there is provided a motor controller to the accompanying claims.

A motor controller for air conditioner includes: a converter converting AC utility power into DC power; an inverter having a plurality of switching elements for inverter, the inverter converting the DC power into predetermined AC power by a switching operation to drive a three-phase motor; and a microcomputer controlling the converter and the inverter and outputting an inverter switching control signal to the inverter, wherein the microcomputer enables a control period of the inverter to conform to a period of an inverter interrupt signal for outputting the inverter switching control signal.

A motor controller for air conditioner according to an exemplary embodiment of the present invention includes: a converter converting AC utility power into DC power; an inverter for compressor having a plurality of switching elements for inverter, the inverter converting the DC power into predetermined AC power by a switching operation to drive a motor for compressor; an inverter for fan having a plurality of switching elements for inverter, the inverter converting the DC power into predetermined AC power by a switching operation to drive a motor for fan; and a microcomputer controlling the converter, the inverter for compressor and the inverter for fan, and outputs an inverter switching control signal for compressor and an inverter switching control signal for fan to the inverter for compressor and the inverter for fan, respectively, wherein the microcomputer enables a control period of the inverter for compressor or fan to conform to a period of a common inverter interrupt signal for generating the inverter switching control signal for compressor and the inverter switching control signal for fan.

A motor controller for air conditioner according to an exemplary embodiment of the present invention may reduce the number of timers by having the period of interrupt signal conform to the control period, thus making it possible to reduce manufacturing costs.

Also, the motor controller for air conditioner according to an exemplary embodiment of the present invention may further reduce manufacturing costs by simultaneously controlling a converter and an inverter, or plural inverters with a single microcomputer.

### DESCRIPTION OF DRAWINGS

FIG. 1 is a schematic view illustrating an air conditioner according to an exemplary embodiment of the present invention.
FIG. 2 is a block diagram illustrating a motor controller for air conditioner according to an exemplary embodiment of the present invention.
FIG. 3 is a timing diagram illustrating a SVPWM waveform.
FIG. 4 is a partial block diagram illustrating the microcomputer shown in FIG. 2.
FIG. 5 is a partial block diagram illustrating the microcomputer shown in FIG. 2.
FIG. 6 is a block diagram illustrating a motor controller for air conditioner according to an exemplary embodiment of the present invention.
FIG. 7 is a partial block diagram illustrating the microcomputer shown in FIG. 6.
FIG. 8 is a block diagram illustrating a motor controller for air conditioner according to an exemplary embodiment of the present invention.

### DETAILED DESCRIPTION

Hereafter, exemplary embodiments of the present invention will be described in more detail with reference to the accompanying drawings.

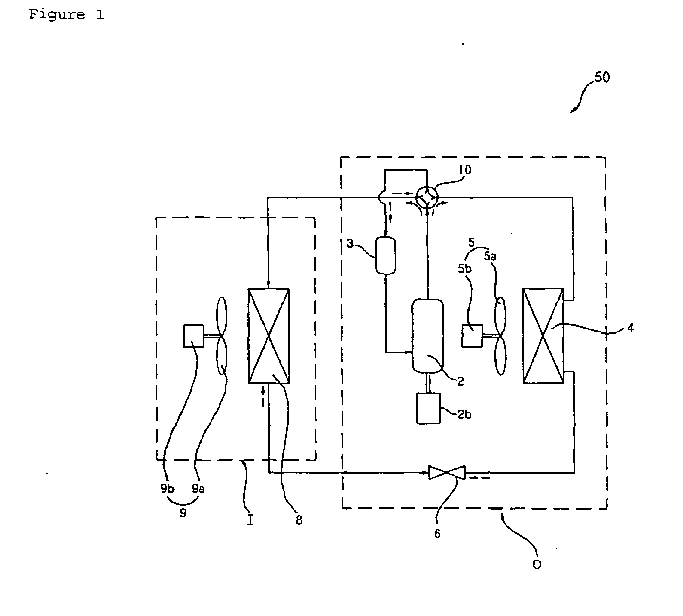

FIG. 1 is a schematic view illustrating an air conditioner according to an exemplary embodiment of the present invention.

Referring to FIG. 1, the air conditioner 50 includes an inner unit I and an outdoor unit O.

The outdoor unit O includes a compressor 2, a first motor 2b for compressor, an outdoor heat exchanger 4, an outdoor air blower 5, an expander 6, a cooling/heating switching valve 10, and accumulator 3. The compressor 2 compresses coolant. The first motor 2b drives the compressor 2. The outdoor heat exchanger 4 dissipates the heat emanating from the compressed coolant. The outdoor air blower 5 includes an outdoor fan 5a located at a side of the heat exchanger 4 to promote the heat dissipation of the coolant and a second motor 5b to rotate the outdoor fan 5a. The expander 6 expands the compressed coolant. The cooling/heating switching valve 10 switches a flow path of the compressed coolant into another. The accumulator 3 stores vaporized coolant for a moment to eliminate moisture and unwanted materials, and supplies the coolant with constant pressure to the compressor 2.

The inner unit I includes an inner heat exchanger 8 and an inner air blower 9. The inner heat exchanger 8 is located indoors to perform cooling/heating. The inner air blower 9 includes an inner fan 9a located in a side of the inner heat exchanger 8 to promote the heat dissipation of the coolant, and a third motor 9b to rotate the inner fan 9a.

There could be provided at least one inner heat exchanger 8. The compressor 2 may be at least one of an inverter compressor and a constant-velocity compressor. The air conditioner 50 may be configured as a cooler for cooling, or as a heat pump for cooling or heating.

A motor associated with the motor controller for air conditioner according to the exemplary embodiment of the present invention may be the motors 2b, 5b, and 9b for operating the indoor fan, the compressor, and the outdoor fan, respectively.

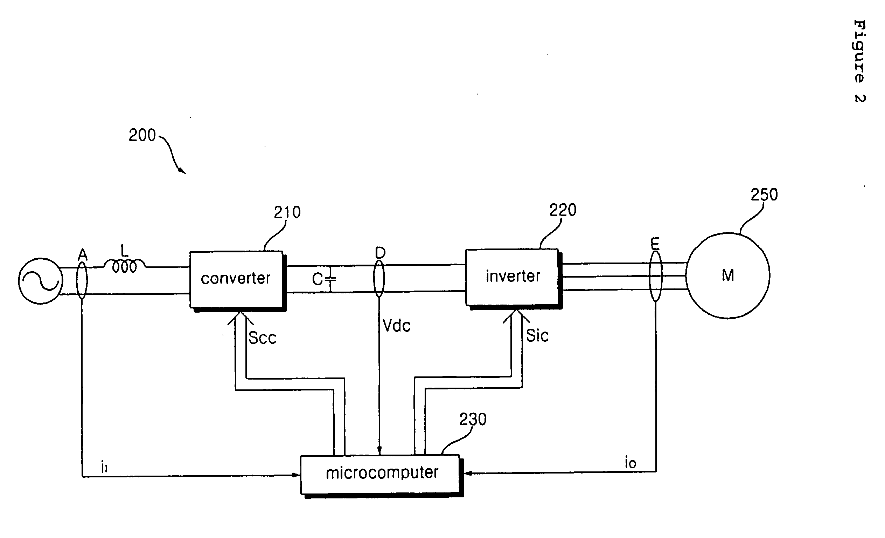

FIG. 2 is a block diagram illustrating a motor controller for air conditioner according to an exemplary embodiment of the present invention.

Referring to FIG. 2, the motor controller 200 includes a converter 210, an inverter 220, and a microcomputer 230. The motor controller 200 may further include a reactor L, an input current detecting means A, a smoothing capacitor C, a dc terminal voltage detecting means D, and an output current detecting means E.

The reactor L is arranged between an AC utility power source and the converter 210 to perform boosting or power factor correcting. The reactor L may also limit harmonics generated during the high-speed switching of the converter 210.

The converter 210 converts the AC utility power outputted from the reactor L into DC power and outputs the converted DC power. Although a single-phase AC power source has been exemplified as the AC utility power source in FIG. 2, the present invention is not limited thereto. For example, a three-phase AC power source may be used as the AC utility power source. The inner configuration of the converter 210 may be modified depending on what type of AC utility power source is used. For example, in case of a single-phase AC power source, a half-bridge type converter may be used for the converter 210, which includes two switching elements and four diodes, and in case of a three-phase AC power source, the converter 210 may include six switching elements and six diodes. The converter 210 includes plural switching elements and performs boosting, power factor correcting, and DC power converting by a switching operation.

The smoothing capacitor C is connected to an output terminal of the converter 210. The smoothing capacitor C serves to smooth the converted DC power outputted from the converter 210. Hereinafter, the output terminal of the converter 210 is referred to as "dc terminal" or "dc link terminal" . The smoothed DC power is applied to the inverter 220.

The dc terminal voltage detecting means D detects a voltage (hereinafter, referred to as "dc terminal voltage Vdc") applied across the output terminals of the converter that are both terminals of the smoothing capacitor C (hereinafter, referred to as "dc terminals". A resistor that is located between the dc terminals may be used as the dc terminal voltage detecting means D. The dc terminal voltage detecting means D detects the dc terminal voltage Vdc on the average, and the detected dc terminal voltage Vdc is inputted to the microcomputer 230 to generate a switching control signal Scc for the converter.

The inverter 220 includes plural switching elements for inverter, and converts the smoothed DC power into three-phase AC power having a prescribed frequency by Ons/Offs of the switching elements. More specifically, the inverter 220 includes total three pairs of switching elements, each pair consisting of an upper switching element and a lower switching element connected in series with the upper switching element, the three pairs connected parallel with each other.

The three-phase AC power outputted from the inverter 220 is applied to each terminal u, v, and w of the three-phase motor 250. The three-phase motor 250 includes a stator and a rotator, wherein the rotator rotates when the AC power is applied to each terminal of the three-phase motor 250 connected to coils wound in the stator. The three-phase motor 250 may include a variety of motors, such as a BLDC motor and a synRM motor.

The output current detecting means E detects an output current iₒ flowing at the output terminals of the inverter 220, i.e. the current flowing in the motor 250. The output current detecting means E may be located between the inverter 220 and the motor 250, and the output current detecting means E may include a current sensor, a current transformer (CT), and a shunt resistor for current detection The output current detecting means E may be a shunt resistor one end of which is connected to a common terminal of the three lower switching elements included in the inverter 220. The detected output current iₒ is inputted to the microcomputer 230 to generate an inverter switching control signal Sic.

The microcomputer 230 controls both the converter 210 and the inverter 220. In other words, both the converter 210 and the inverter 220 may be controlled by a single microcomputer. For this purpose, the microcomputer 230 generates the converter switching control signal Scc based on the dc terminal voltage Vdc detected by the dc terminal voltage detecting means D and the inverter switching control signal Sic based on the output current iₒ detected by the output current detecting means E.

The microcomputer 230 enables a control period Ti of the inverter to conform to a period of an inverter interrupt signal for outputting the inverter switching control signal Sic.

Also, the microcomputer 230 enables a control period Tc of the converter to conform to a period of a converter interrupt signal for outputting the converter switching control signal Scc.

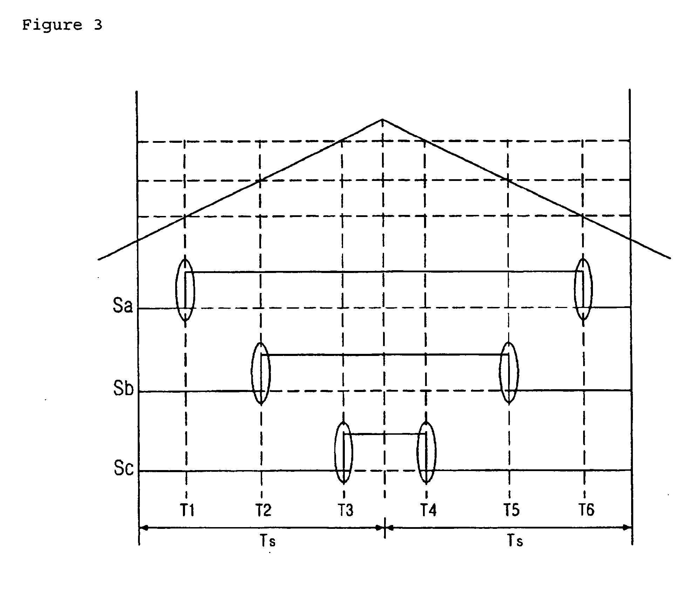

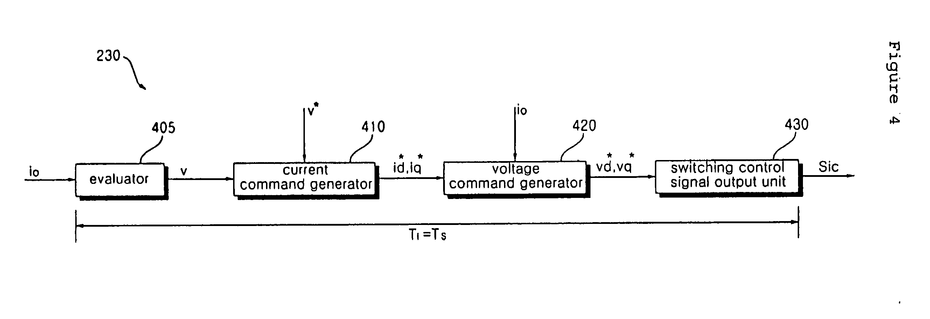

Detailed descriptions of the control period Ti of the inverter, the inverter switching control signal Sic, and the inverter interrupt signal are given later with reference to FIGS. 3 and 4.

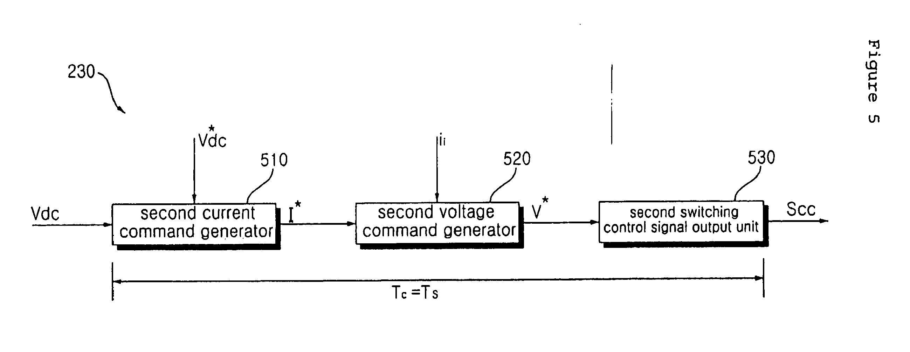

Detailed descriptions of the control period Tc of the converter, the converter switching control signal Scc, and the converter interrupt signal are given later with reference to FIGS. 3 and 5.

The input current detecting means A detects an input current iᵢ generated from an AC utility power source. The input current detecting means A may be located between the three-phase AC power source and the converter 210, and the input current detecting means A may include a current sensor, a current transformer (CT), and a shunt resistor for current detection The detected input current iᵢ is inputted to the microcomputer 230 to generate the converter switching control signal Scc.

FIG. 3 is a timing diagram illustrating a SVPWM waveform, and FIG. 4 is a partial block diagram illustrating the microcomputer shown in FIG. 2.

FIG. 3 depicts the SVPWM (Space Vector Pulse Width Modulation) waveform according to On/Off operations of three upper switching elements Sa, Sb, and Sc included in the inverter 220 or converter 210 during a period of time of 2Ts. "Ts" refers to the reciprocal of a switching control frequency, and this is a unit switching control time.

In case that the converter 210 has six switching elements and diodes, each being connected in parallel with each switching element similarly to the inverter 220, the SVPWM waveform shown in FIG. 3 may be applied to the converter 210.

Hereinafter, the description will primarily focus on the inverter 210.

The On/Off timing of each switching element Sa, Sb, and Sc is determined by voltage command values v*d and v*q from a voltage command generator 420 to be described later with reference to FIG. 4 in order to generate the inverter switching control signal Sic based on SVPWM (Space Vector Pulse Width Modulation).

A timer included in the microcomputer 230 may generate an interrupt signal (not shown), and the unit switching control time Ts may be determined based on the interrupt signal. That is, the On/Off switching section of the interrupt signal may be synchronized with the unit switching control time Ts shown in FIG. 3.

In addition, the interrupt signal may be generated by an alert signal that occurs when an error is detected on at least one or more of the converter 210, the inverter 220, and the microcomputer 230.

In summary, the concept of the interrupt signal may be the one including the unit switching control time Ts.

Hereinafter, the interrupt signal will be also referred to as the unit switching control time Ts.

FIG. 4 depicts a procedure which generates the inverter switching control signal Sic from the microcomputer 230. The microcomputer 230 includes an evaluator 405, a current command generator 410, a voltage command generator 420, and a switching control signal output unit 430 to generate the inverter switching control signal Sic.

The evaluator 405 evaluates the speed v of rotator of the motor based on the detected output current iₒ. The evaluator 405 may evaluate the speed v of motor rotator using a speed evaluation algorithm by an electrical equation of the motor.

The current command generator 410 generates d,q axis current command values i*d and i*q based on the evaluated speed v and a predetermined speed command value v* . For this purpose, the current command generator 410 may include a PI controller (not shown) and a d,q axis current command limiting unit (not shown).

The voltage command generator 420 generates d,q axis voltage command values v*d and v*q based on the d, q axis current command values i*d and i*q and the detected output current iₒ. For this purpose, the voltage command generator 420 may include a PI controller (not shown) and a d,q axis voltage command limiting unit (not shown).

The switching control signal output unit 430 outputs a switching control signal Sic to drive the switching elements for inverter based on the d,q axis voltage command values v*d and v*q. The switching control signal Sic is applied to the gate terminal of the switching elements included in the inverter 220 to control Ons/Offs of the switching elements for inverter.

Although FIG. 4 shows the output current iₒ is inputted to the voltage command generator 420, the present invention is not limited thereto. For example, the output current iₒ may be a d,q axis transformed value in a rotating coordinate system.

The inverter control period Ti may be the total sum of operation times of the evaluator 405, the current command generator 410, the voltage command generator 420, and the switching control signal output unit 430.

The microcomputer 230 may enable the control period Ti of inverter to conform to the unit switching control time Ts shown in FIG. 3, i.e. the period Ts of the inverter interrupt signal. This permits the number of timers included in the microcomputer 230 to be reduced, thus making it possible to reduce manufacturing costs.

FIG. 5 is a partial block diagram illustrating the microcomputer shown in FIG. 2.

Referring to FIG. 5, the microcomputer 230 includes a second current command generator 510, a second voltage command generator 520, and a second switching control signal output unit 530 to generate the converter switching control signal Scc.

The second current command generator 510 generates a current command value I* based on a command dc terminal voltage V*dc and a dc terminal voltage Vdc detected by the dc terminal voltage detecting means D.

For this purpose, the second current command generator 510 may include a PI controller (not shown) and a current command limiting unit (not shown).

The second voltage command generator 520 generates a voltage command value V* based on the current command value I* and the detected input current iᵢ. For this purpose, the second voltage command generator 520 may include a PI controller (not shown) and a voltage command limiting unit (not shown).

The second switching control signal output unit 530 outputs a switching control signal Scc to drive the switching elements for converter based on the voltage command value V*. The switching control signal Scc is applied to the gate terminal of the switching elements included in the converter to control

Ons/Offs of the switching elements for converter.

Although FIG. 5 shows the input current iᵢ is inputted to the second voltage command generator 520, the present invention is not limited thereto. For example, the input current iᵢ may be a d, q axis transformed value in a rotating coordinate system.

The converter control period Tc may be the total sum of operation times of the second current command generator 510, the second voltage command generator 520, and the switching control signal output unit 530.

The microcomputer 230 may enable the control period Tc of converter to conform to the unit switching control time Ts shown in FIG. 3, i.e. the period of the converter interrupt signal. This permits the number of timers included in the microcomputer 230 to be reduced, thus making it possible to reduce manufacturing costs.

Furthermore, the microcomputer 230 may also enable the control period Tc of converter to conform to the period of the inverter interrupt signal. That is, the microcomputer 230 may enable the control period of inverter, the control period of converter, and the period of inverter interrupt signal to conform to one another (i.e. Ti=Tc=Ts).

The microcomputer 230 may enable the control period Ti of inverter, the control period Tc of converter, the period of inverter interrupt signal, and the period of converter interrupt signal to conform to one another.

Assuming that the period of the inverter interrupt signal refers to Tsi and the period of the converter interrupt signal refers to Tsc, a relationship of Tc=Ti=Tsi=Tsc may be established. This may considerably reduce the number of timers, so that the manufacturing costs may decrease.

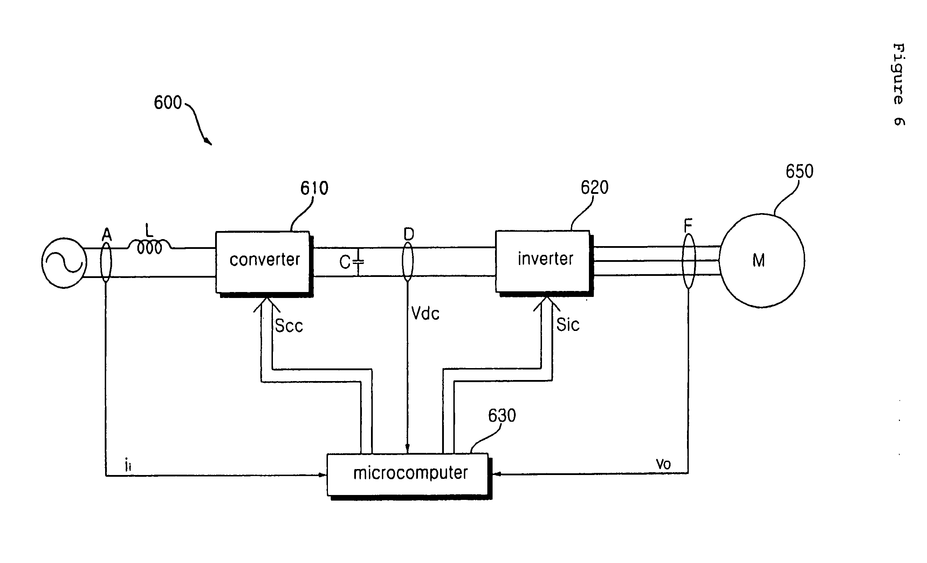

FIG. 6 is a block diagram illustrating a motor controller for air conditioner according to an exemplary embodiment of the present invention.

Referring to FIG. 6, the motor controller 600 includes a converter 610, an inverter 620, and a microcomputer 630. The motor controller 600 may further include a reactor L, an input current detecting means A, a smoothing capacitor C, a dc terminal voltage detecting means D, and a CEMF (counter electromotive force) detecting means F.

The motor controller 600 shown in FIG. 6 is similar to the motor controller 200 shown in FIG. 2. That is, the converter 610, the inverter 620, the microcomputer 630, the reactor L, the input current detecting means A, the smoothing capacitor C, and the dc terminal voltage detecting means D are similar to the corresponding components of FIG. 2. The two differ from each other in that the output current detecting means E is replaced with the CEMF detecting means F in FIG. 6.

The CEMF detecting means F detects a counter electromotive force vₒ induced from the motor 650. The CEMF detecting means F may be located between the inverter 620 and the motor 650, and this may use a resistor to detect the counter electromotive force vₒ. The detected counter electromotive force vₒ is inputted to the microcomputer 630 to generate an inverter switching control signal Sic.

The microcomputer 630 controls both the converter 610 and the inverter 620.

In other words, both the converter 610 and the inverter 620 may be controlled by a single microcomputer. For this purpose, the microcomputer 630 generates the converter switching control signal Scc based on the dc terminal voltage Vdc detected by the dc terminal voltage detecting means D and the inverter switching control signal Sic based on the output current iₒ detected by the output current detecting means E.

The microcomputer 630 enables the control period Ti of the inverter to conform to the period of the interrupt signal for outputting the inverter switching control signal Sic.

Also, the microcomputer 230 enables the control period Tc of the converter to conform to the period of the interrupt signal for outputting the converter switching control signal Scc.

The control period Tc of converter, the converter switching control signal Scc, and the interrupt signal have been detailed above.

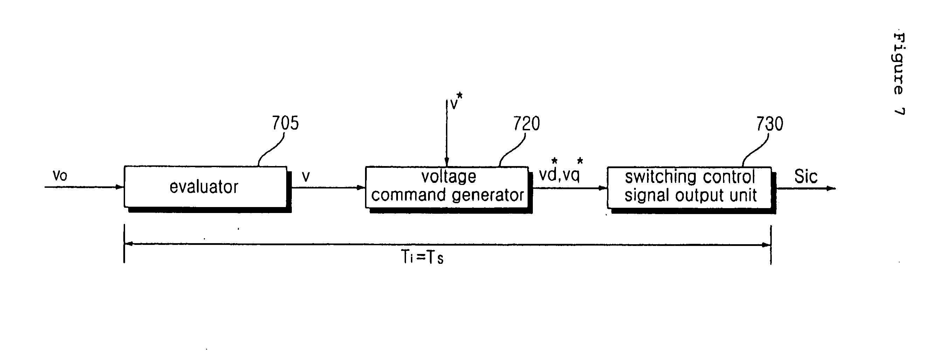

Detailed descriptions of the control period Ti of the inverter, the inverter switching control signal Sic, and the inverter interrupt signal are given later with reference to FIG. 7.

FIG. 7 is a partial block diagram illustrating the microcomputer shown in FIG. 6.

Referring to FIG. 7, the microcomputer 630 includes an evaluator 705, a voltage command generator 720, and a switching control signal output unit 730.

The evaluator 705 receives each counter electromotive force vₒ for each terminal of a three-phase motor, and evaluates the speed v based on the counter electromotive force vₒ.

The voltage command generator 720 generates voltage command values v*d and v*q based on the evaluated speed v and a predetermined speed command value v*. For this purpose, the voltage command generator 720 may include a PI controller (not shown) and a voltage command limiting unit (not shown).

The microcomputer 630 may further include a current command generator (not shown) located before the voltage command generator 720 to generate current command values i*d and i*q based on the evaluated speed v and the speed command value v*.

The switching control signal output unit 730 outputs an inverter switching control signal Sic, which is a PWM signal, to the inverter 620 based on the voltage command values v*d and v*q. The switching control signal Sic is applied to the gate terminal of the switching elements included in the inverter to control Ons/Offs of the switching elements for inverter.

The inverter control period Ti may be the total sum of operation times of the evaluator 705, the voltage command generator 720, and the switching control signal output unit 730.

The microcomputer 630 may enable the control period Ti of inverter to conform to the unit switching control time Ts, i.e. the period Ts of the inverter interrupt signal (i.e. Ti=Ts). This permits the number of timers included in the microcomputer 630 to be reduced, thus making it possible to reduce manufacturing costs.

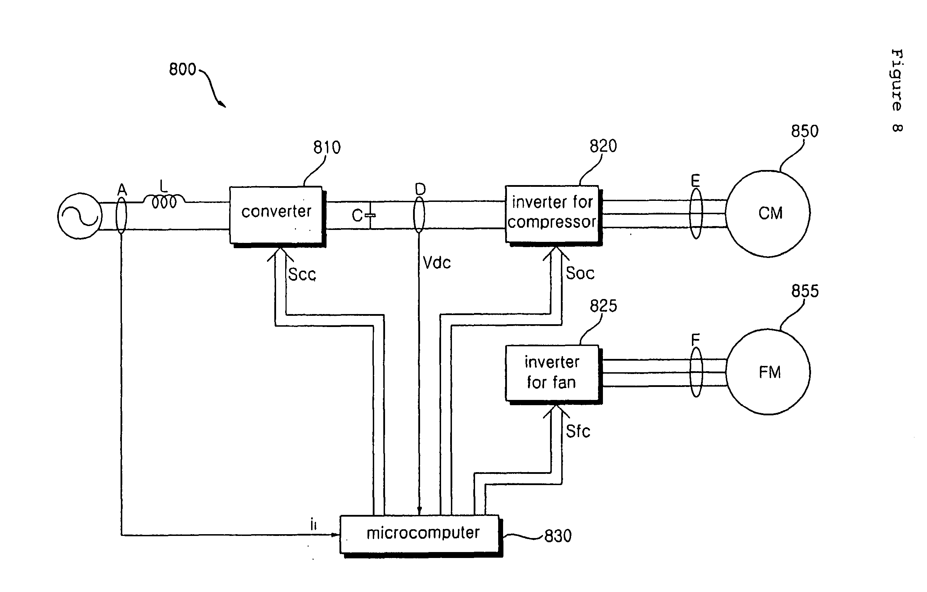

FIG. 8 is a block diagram illustrating a motor controller for air conditioner according to an exemplary embodiment of the present invention.

Referring to FIG. 8, the motor controller 800 includes a converter 810, an inverter 820 for compressor, an inverter 825 for fan, and a microcomputer 830.

The motor controller 800 may further include a reactor L, an input current detecting means A, a smoothing capacitor C, a dc terminal voltage detecting means D, and output current detecting means E and F.

The motor controller 800 shown in FIG. 8 is similar to the motor controller 200 shown in FIG. 2. That is, the converter 610, the microcomputer 630, the reactor L, the input current detecting means A, the smoothing capacitor C, the dc terminal voltage detecting means D, and the output current detecting means E and F are similar to the corresponding components of FIG. 2. Only the difference lies in that the inverter is provided in plurality.

That is, the motor controller 800 shown in FIG. 8 includes two inverters, i.e. inverter 820 for compressor and inverter 825 for fan.

The inverter 820 for compressor includes plural switching elements, and the inverter 820 converts DC power into prescribed AC power by a switching operation to drive the motor 850 for compressor. That is, the inverter 820 for compressor is controlled by an inverter switching control signal Soc for compressor generated from the microcomputer 830 based on an output current flowing in the motor 850 for compressor detected by the output current detecting means E.

The inverter 825 for fan includes plural switching elements, and the inverter 825 converts DC power into prescribed AC power by a switching operation to drive the motor 855 for fan. That is, the inverter 825 for fan is controlled by an inverter switching control signal Sfc for fan generated from the microcomputer 830 based on an output current flowing in the motor 855 for fan detected by the output current detecting means F.

The microcomputer 830 controls all of the converter 810, the inverter 820 for compressor, and the inverter 825 for fan. That is, the converter 810, the inverter 820 for compressor, and the inverter 825 for fan may be controlled by a single microcomputer.

The microcomputer 830 enables the control period of the inverter for compressor and the control period of the inverter for fan to conform to the period of a common inverter interrupt signal in the microcomputer 830. For this purpose, the microcomputer 830 may include a timer.

The control period of the inverter for compressor and the control period of the inverter for fan may be the total sum of operating times of the evaluator, the current command generator, the voltage command generator, and the switching control signal output unit as shown in FIG. 4.

Also, the microcomputer 830 may enable the control period Tc of the converter to conform to the period of the converter interrupt signal for outputting the converter switching control signal Scc.

The converter control period Tc may be the total sum of operation times of the second current command generator, the second voltage command generator, and the second switching control signal output unit as shown in FIG. 5.

The microcomputer 830 may also enable the control period Tc of converter to conform to the period Ts of the common inverter interrupt signal. That is, the microcomputer 830 may enable the control period Ti of the inverter for compressor or fan, the control period Tc of the converter, and the period Ts of the common inverter interrupt signal to conform to one another (i.e. Ti=Tc=Ts).

The microcomputer 830 may enable the control period Ti of the inverter for compressor or fan, the control period Tc of converter, the period of the common inverter interrupt signal, and the period of converter interrupt signal to conform to one another. Assuming that the period of the inverter interrupt signal refers to Tsi and the period of the converter interrupt signal refers to Tsc, a relationship of Tc=Ti=Tsi=Tsc may be established. This may considerably reduce the number of timers, so that the manufacturing costs may decrease.

The control period Ti of the inverter for compressor or fan may be the total sum of operating times of the evaluator, the voltage command generator, and the switching control signal output unit shown in FIG. 7.

A motor controller for air conditioner comprising: a converter converting AC utility power into DC power; an inverter having a plurality of switching elements for inverter, the inverter converting the DC power into predetermined AC power by a switching operation to drive a three-phase motor; and a microcomputer controlling the converter and the inverter and outputting an inverter switching control signal to the inverter, wherein the microcomputer enables a control period of the inverter to conform to a period of an inverter interrupt signal for outputting the inverter switching control signal.

The motor controller for air conditioner of claim 11, wherein the control period of the converter is a total sum of operating times of the second current command generator, the second voltage command generator, and the second switching control signal output unit.

The foregoing embodiments and advantages are merely exemplary and are not to be construed as limiting the present invention. The present teaching can be readily applied to other types of apparatuses. Many alternatives, modifications, and variations will be apparent to those skilled in the art.

The motor controller for air conditioner according to the present invention may be used to have the period of interrupt signal conform to the control period.

## Claims

1. A motor controller (200) for an air conditioner comprising:
a converter (210) arranged to convert AC utility power into DC power;
an inverter (220) having a plurality of switching elements, the inverter being arranged to convert the DC power into AC power by a switching operation of the plurality of switching elements to drive a three-phase motor; and
a microcomputer (230) arranged to control the inverter by outputting an inverter switching control signal to the inverter, **characterised in that** the microcomputer is arranged to enable a control period of the inverter to conform to a period of an inverter interrupt signal for outputting the inverter switching control signal, and wherein
the microcomputer comprises an evaluator (405) arranged to evaluate a speed based on an output current flowing in the motor, a current command generator (410) arranged to generate a current command value based on the evaluated speed and a speed command value, a voltage command generator (420) arranged to generate a voltage command value based on the current command value and the output current, and a switching control signal output unit (430) arranged to generate the inverter switching control signal based on the voltage command value wherein
the control period of the inverter is a total sum of operation times of the evaluator, the current command generator, the voltage command generator, and the switching control signal output unit.

2. The motor controller for an air conditioner of claim 1, wherein
the microcomputer comprises a timer arranged to generate the inverter interrupt signal.

3. The motor controller for an air conditioner of claim 1 or 2, wherein
the microcomputer is arranged to output a converter switching control signal to the converter, wherein the microcomputer is arranged to enable a control period of the converter to conform to a period of an converter interrupt signal for outputting the converter switching control signal.

4. The motor controller for an air conditioner according to any one of the preceding claims, wherein
the microcomputer is arranged to enable the control period of the converter to conform to the period of the inverter interrupt signal.

5. The motor controller for an air conditioner according to any one of the preceding claims, wherein
the microcomputer is arranged to output a converter switching control signal to the converter, wherein the microcomputer further arranged to enable the period of the inverter interrupt signal to conform to a period of an converter interrupt signal for outputting the converter switching control signal.

6. The motor controller for an air conditioner of claim 3, wherein
the current command generator is arranged to generate a current command value based on a dc terminal voltage that is a voltage applied across output terminals of the converter, the voltage command generator for generating a voltage command value based on an input current inputted from the AC utility power source and the current command value, and the switching control signal output unit arranged to generate the converter switching control signal based on the voltage command value.

7. The motor controller for an air conditioner of claim 6, wherein
the control period of the converter is a total sum of operating times of the second current command generator, the second voltage command generator, and the second switching control signal output unit.

8. A motor controller for an air conditioner of any one of the preceding claims, where the invention is arranged to drive a motor for a compressor, further comprising a second inverter having a plurality of switching elements, the second inverter being arranged to convert the DC power into AC power by a switching operation of the plurality of switching elements to drive a motor for a fan; wherein the microcomputer is arranged to enable a control period of the invention or second invertor to confirm to a period of a common inverter interrupt signal for generating an inverter switching control signal or second inverter switching control signal.

9. A motor controller for an air conditioner of any one of the preceding claims, wherein the microcomputer is arranged for controlling the converter and the inverter.

## Patentansprüche

1. Motorsteuerung (200) für eine Klimaanlage, welche Folgendes aufweist:
einen Umwandler (210), welcher zur Umwandlung von Wechselstrom in Gleichstrom ausgelegt ist;
einen Inverter (220), welcher eine Vielzahl von Schaltgliedern aufweist, wobei der Inverter zur Umwandlung des Gleichstroms in Wechselstrom mit Hilfe eines Schaltvorgangs der Vielzahl von Schaltgliedern ausgelegt ist, um einen Drehstrommotor anzutreiben; und
einen Mikrocomputer (230), welcher zur Steuerung des Inverters ausgelegt ist, indem er ein Inverter-Schaltsteuersignal an den Inverter ausgibt, **dadurch gekennzeichnet, dass** der Mikrocomputer ausgelegt ist, um die Angleichung der Steuerperiode des Inverters an eine Periode eines Inverter-Unterbrechungssignals zur Ausgabe des Inverter-Schaltsteuersignals zu ermöglichen, und wobei
der Mikrocomputer Folgendes aufweist: einen Auswerter (405), welcher zur Auswertung einer Geschwindigkeit basierend auf einem in dem Motor fließenden Ausgangsstrom ausgelegt ist, einen Strombefehlerzeuger (410), welcher zur Erzeugung eines Strombefehlswerts basierend auf der ausgewerteten Geschwindigkeit und eines Geschwindigkeits-Befehlswerts ausgelegt ist, einen Spannungsbefehlerzeuger (420), welcher zur Erzeugung eines Spannungsbefehlswerts basierend auf dem Strombefehlswert und dem Ausgangsstrom ausgelegt ist, und eine Schaltsteuersignal-Ausgabeeinheit (430) aufweist, welche zur Erzeugung des Inverter-Schaltsteuesignals basierend auf dem Spannungsbefehlswert ausgelegt ist, **dadurch gekennzeichnet, dass**
die Steuerperiode des Inverters eine Gesamtsumme der Betriebszeiten des Auswerters, des Strombefehlerzeugers, des Spannungsbefehlerzeugers und der Schaltsteuersignal-Ausgabeeinheit ist.

2. Motorsteuerung für eine Klimaanlage nach Anspruch 1, **dadurch gekennzeichnet, dass**
der Mikrocomputer einen Timer aufweist, welcher zur Erzeugung des Inverter-Unterbrechungssignals ausgelegt ist.

3. Motorsteuerung für eine Klimaanlage nach Anspruch 1 oder 2, **dadurch gekennzeichnet, dass**
der Mikrocomputer zur Ausgabe eines Umwandler-Schaltsteuersignals an den Umwandler ausgelegt ist, wobei der Mikrocomputer ausgelegt ist, um die Angleichung einer Steuerperiode des Umwandlers an eine Periode eines Umwandler-Unterbrechungssignals zur Ausgabe des Umwandler-Schaltsteuersignals zu ermöglichen.

4. Motorsteuerung für eine Klimaanlage nach einem der vorhergehenden Ansprüche, **dadurch gekennzeichnet, dass**
der Mikrocomputer ausgelegt ist, um die Angleichung der Steuerperiode des Umwandlers and die Periode des Inverter-Unterbrechungssignals zu ermöglichen.

5. Motorsteuerung für eine Klimaanlage nach einem der vorhergehenden Ansprüche, **dadurch gekennzeichnet, dass**
der Mikrocomputer zur Ausgabe eines Umwandler-Schaltsteuersignals an den Umwandler ausgelegt ist, wobei der Mikrocomputer des Weiteren ausgelegt ist, um die Angleichung des Inverter-Unterbrechungssignals an eine Periode eines Umwandler-Unterbrechungssignals zur Ausgabe des Umwandler-Schaltsteuersignals zu ermöglichen.

6. Motorsteuerung für eine Klimaanlage nach Anspruch 3, **dadurch gekennzeichnet, dass**
der Strombefehlerzeuger zur Erzeugung eines Strombefehlswerts basierend auf einer Gleichstrom-Klemmenspannung, bei welcher es sich um eine Spannung handelt, welche über Ausgangsklemmen des Umwandlers angelegt wird, der Spannungsbefehlerzeuger zur Erzeugung eines Spannungsbefehlswerts basierend auf einem von der Wechselstromquelle eingegebenen Eingangsstrom und dem Strombefehlswert, und die Schaltsteuersignal-Ausgabeeinheit zur Erzeugung des Umwandler-Schaltsteuersignals basierend auf dem Spannungsbefehlswert ausgelegt sind.

7. Motorsteuerung für eine Klimaanlage nach Anspruch 6, **dadurch gekennzeichnet, dass**
die Steuerperiode des Umwandlers eine Gesamtsumme der Betriebszeiten des zweiten Strombefehlerzeugers, des zweiten Spannungsbefehlerzeugers und der zweiten Schaltsteuersignal-Ausgabeeinheit ist.

8. Motorsteuerung für eine Klimaanlage nach einem der vorhergehenden Ansprüche, in denen die Erfindung zum Antrieb eines Motors für einen Verdichter ausgelegt ist, wobei die Motorsteuerung des Weiteren einen zweiten Inverter mit einer Vielzahl von Schaltgliedern aufweist, wobei der zweite Inverter zur Umwandlung des Gleichstroms in Wechselstrom mit Hilfe eines Schaltvorgangs der Vielzahl von Schaltgliedern ausgelegt ist, um einen Motor für ein Gebläse anzutreiben; **dadurch gekennzeichnet, dass** der Mikrocomputer ausgelegt ist, um eine Angleichung der Steuerperiode der Erfindung oder des zweiten Inverters an eine Periode eines gemeinsamen Inverter-Unterbrechungssignals zur Erzeugung eines Inverter-Schaltsteuersignals oder eines zweiten Inverter-Schaltsteuersignals zu ermöglichen.

9. Motorsteuerung für eine Klimaanlage nach einem der vorhergehenden Ansprüche, **dadurch gekennzeichnet, dass** der Mikrocomputer zur Steuerung des Umwandlers und des Inverters ausgelegt ist.

## Revendications

1. Contrôleur de moteur (200) pour un climatiseur comprenant:
un convertisseur (210) agencé pour convertir une puissance d'utilité CA en puissance CC;
un inverseur (220) comportant une pluralité d'éléments de commutation, l'inverseur étant agencé pour convertir la puissance CC en puissance CA par une opération de commutation de la pluralité des éléments de commutation pour entraîner un moteur triphasé; et
un micro-ordinateur (230) agencé pour commander l'inverseur en émettant un signal de commande de commutation d'inverseur à l'inverseur, **caractérisé en ce que** le micro-ordinateur est agencé pour permettre à une période de commande de l'inverseur de s'adapter à une période d'un signal d'interruption d'inverseur pour émettre le signal de commande de commutation d'inverseur, et où
le micro-ordinateur comprend un évaluateur (405) agencé pour évaluer une vitesse sur la base d'un courant de sortie passant dans le moteur, un générateur de commande de courant (410) agencé pour produire une valeur de commande de courant sur la base de la vitesse évaluée et d'une valeur de commande de vitesse, un générateur de commande de tension (420) agencé pour produire une valeur de commande de tension sur la base de la valeur de commande de courant et du courant de sortie, et une unité de sortie de signal de commande de commutation (430) agencée pour produire le signal de commande de commutation de l'inverseur basé sur la valeur de commande de tension, où
la période de commande de l'inverseur est une somme totale des temps de fonctionnement de l'évaluateur, du générateur de commande de courant, du générateur de commande de tension et de l'unité de sortie de signal de commande de commutation.

2. Contrôleur de moteur d'un climatiseur selon la revendication 1, où
le micro-ordinateur comprend une horloge agencée pour produire le signal d'interruption de l'inverseur.

3. Contrôleur de moteur d'un climatiseur selon la revendication 1 ou 2, où
le micro-ordinateur est agencé pour émettre un signal de commande de commutation de convertisseur au convertisseur, où le micro-ordinateur est agencé pour permettre à une période de commande du convertisseur de s'adapter à une période d'un signal d'interruption de convertisseur pour émettre le signal de commande de commutation de convertisseur.

4. Contrôleur de moteur d'un climatiseur selon l'une quelconque des revendications précédentes, où
le micro-ordinateur est agencé pour permettre à la période de commande du convertisseur de s'adapter à la période du signal d'interruption de l'inverseur.

5. Contrôleur de moteur d'un climatiseur selon l'une quelconque des revendications précédentes, où
le micro-ordinateur est agencé pour émettre un signal de commande de commutation de convertisseur au convertisseur, où le micro-ordinateur est agencé en outre pour permettre à la période du signal d'interruption de l'inverseur de s'adapter à une période du signal d'interruption de convertisseur pour émettre le signal de commande de commutation du convertisseur.

6. Contrôleur de moteur d'un climatiseur selon la revendication 3, où
le générateur de commande de courant est agencé pour produire une valeur de commande de courant sur la base d'une tension terminale cc qui est une tension appliquée aux bornes de sortie du convertisseur, le générateur de commande de tension pour produire une valeur de commande de tension basée sur un courant d'entrée entré de la source de puissance d'utilité CA et la valeur de commande de courant, et l'unité de sortie de signal de commande de commutation étant agencée pour produire le signal de commande de commutation du convertisseur sur la base de la valeur de commande de tension.

7. Contrôleur de moteur d'un climatiseur selon la revendication 6, où
la période de commande du convertisseur est une somme totale des temps de fonctionnement du deuxième générateur de commande de courant, du deuxième générateur de commande de tension et de la deuxième unité d'émission de signal de commande de commutation.

8. Contrôleur de moteur d'un climatiseur selon l'une quelconque des revendications précédentes, où l'invention est agencée pour entraîner un moteur pour un compresseur, comprenant en outre un deuxième inverseur ayant une pluralité d'éléments de commutation, le deuxième inverseur étant agencé pour convertir la puissance CC en puissance CA par une opération de commutation de la pluralité d'éléments de commutation pour entraîner un moteur pour un ventilateur; où le micro-ordinateur est agencé pour permettre à une période de commande de l'inverseur ou du deuxième inverseur de s'adapter à une période d'un signal d'interruption d'inverseur commun pour produire un signal de commande de commutation d'inverseur ou un signal de commande de commutation de deuxième inverseur.

9. Contrôleur de moteur d'un climatiseur selon l'une quelconque des revendications précédentes, où le micro-ordinateur est agencé pour commander le convertisseur et l'inverseur.
